# EUROPEAN PATENT APPLICATION

(11) **EP 4 385 373 A1**
(43) Date of publication of application: **19.06.2024**
(21) Application number: 22855051.3
(22) Date of filing: 01.06.2022
(51) Int. Cl.: A47J 36/00, A47J 36/38

(54) **COOKING UTENSIL**

(30) Priority: 10.08.2021 CN 202121868506 U
(71) Applicant: Zhejiang Shaoxing Supor Domestic Electrical Appliance Co., Ltd., Shaoxing, Zhejiang 312017 (CN)
(72) Inventor: ZHANG, Rongyang, Shaoxing, Zhejiang 312017 (CN)
(74) Representative: LLR
(86) International application number: PCT/CN2022/096533
(87) International publication number: WO 2023/016066

(57) **Abstract**

A cooking utensil including: a pot body (1); a lid body (10) arranged above the pot body in an openable and closable manner; a safety valve assembly (20) arranged on the lid body (10) and including a valve body (21), the valve body (21) being provided with a cavity (211) inside, the upper end of the cavity (211) being provided with an opening (212), wherein the safety valve assembly (20) further includes a covering member (22), which is connected to the valve body (21) and blocks the opening (212). Since the valve body is provided with a covering member, water will not enter the inside of the valve body during use, which ensures that the opening preventing valve can be pressurized normally and ensures the good cooking effect of the cooking utensil.

## Description

### Field of the Invention

The present invention relates to the technical field of small household appliances, and specifically to a cooking utensil.

### Background of the Invention

The cooking utensil is provided with an anti-opening safety valve. The anti-opening safety valve is a structure with an opening at the upper end and a closed lower end.

When the liquid in the cooking cavity boils, water vapor will enter the valve body through the upper opening of the safety valve, or when the user is cleaning the cooking utensil, water will also enter the valve body through the opening, as a result, the weight of the anti-opening safety valve increases, and the pressure cannot be raised in time when the cooking utensil is working. Thereby, the heating time of the cooking utensil is too long and the taste of the cooked food is not good. If too much water enters the safety valve, it will cause the cooking chamber to be unable to pressurize for a long time, causing problems such as burnt rice at the bottom.

### Summary of the Invention

The main purpose of the present invention is to provide a cooking utensil to solve the problem in the prior art that water easily enters the opening preventing safety valve.

In order to achieve the above object, according to one aspect of the present invention, a cooking utensil is provided, including: a pot body; a lid body arranged above the pot body in an openable and closable manner; and a safety valve assembly arranged on the lid body. The safety valve assembly includes a valve body, a cavity is provided in the valve body, and an opening is provided at the upper end of the cavity. The safety valve assembly also includes a covering member, which is connected to the valve body and blocks the opening.

By applying the technical solution of the present invention, since a covering member is provided on the valve body, the opening at the upper end of the valve body can be covered and blocked, thus during the use of the cooking utensil, the boiling water vapor in the cooking cavity will not enter the inside of the valve body through the opening on the valve body, and users will not have water enter the valve body when cleaning the cooking utensil. This ensures that the opening preventing valve can be pressurized normally and ensures good cooking effects of the cooking utensil.

Further, the valve body is an opening preventing valve, and the opening preventing valve can move in a vertical direction relative to the lid body to control the opening and closing of the lid body. Since a covering member is provided on the valve body, the opening can be covered and blocked to prevent water vapor from entering the cavity through the opening, thereby ensuring the normal up and down movement of the opening preventing valve, allowing timely pressure increase and release in the cooking cavity to ensure normal cooking results.

Further, the valve body includes a pressure relief valve, and the pressure relief valve includes a valve core disposed at the lower end of the cavity and an elastic member disposed inside the cavity and abutting against the valve core. The elastic force of the elastic member provides downward resistance for the valve core to keep the valve core in the closed position and maintain the internal pressure of the pot body when the pressure inside the pot body is within the normal range.

Further, the covering member includes a top wall and a circumferential side wall extending downward from the top wall. The top wall covers/blocks the opening, and the circumferential side wall is located around an outer periphery of the valve body. The above structure is relatively simple and easy to process and assemble.

Further, an anti-separation structure is provided between the valve body and the covering member such that the anti-separation structure restricts the covering member from detaching from the valve body. The above arrangement ensures the stability of the installation of the covering member on the valve body, prevents the covering member from detaching from (falling off) the valve body during use of the cooking utensil or when the user cleans the cooking utensil, and ensures a good waterproof effect.

Further, the anti-separation structure includes: an anti-separation protrusion provided on an inner wall surface of the circumferential side wall, and an anti-separation groove provided on an outer peripheral wall of the valve body. The anti-separation protrusion cooperates with the anti-separation groove to restrict the covering member from detaching from the valve body. The above arrangement can effectively prevent the covering member from detaching from (falling off) the valve body during use and affecting the water-blocking effect. Moreover, the above-mentioned plug fitting structure is simple and convenient for assembly operation.

Further, a gap is arranged between the inner wall surface of the circumferential side wall and the outer peripheral wall of the valve body. Since there is a gap between the inner wall surface of the circumferential side wall and the outer peripheral wall of the valve body, it is ensured that when the valve body is releasing pressure, the air can flow out from the gap, ensuring normal exhaust and pressure relief.

Further, a flow-passing structure is further arranged between the valve body and the covering member. The above arrangement ensures that the setting of the covering member will not affect the exhaust of the valve body, and ensures the normal operation of the valve body.

Further, the flow-passing structure is a notch provided on the valve body, the notch is arranged on an outer wall surface of the valve body, and an air flow passage gap is arranged between the covering member and the notch. The above arrangement forms a flow-passing gap between the top end of the notch and the inner wall surface of the covering member, so that exhaust can be achieved in the circumferential direction of the valve body and the exhaust efficiency is high.

Further, the covering member is made of silicone material. The silicone material is light in texture and has good waterproof effect. When assembled to the opening preventing valve, it will not significantly increase the weight of the valve body, nor will it affect the normal pressure-up of the cooking utensil, and the cost is low.

### Description of the Drawings

The description and drawings that constitute a part of this application are used to provide a further understanding of the present invention. The illustrative embodiments of the present invention and their descriptions are used to explain the present invention and do not constitute an improper limitation of the present invention. In the attached figures:
Figure 1 shows a schematic cross-sectional structural view of an embodiment of a cooking utensil according to the present invention;
Figure 2 shows a cross-sectional view of the safety valve assembly of Figure 1;
Figure 3 shows a schematic structural diagram of the valve body of Figure 1; and
Figure 4 shows a schematic structural diagram of the covering member of Figure 1.

Among them, the above-mentioned drawings include the following reference signs:
1. Pot body; 10. Lid body; 20. Safety valve assembly; 21. Valve body; 211. Cavity; 212. Opening; 213. Valve core; 214. Elastic member; 215. Anti-separation groove; 216. Notch 22. Covering member; 221. Top wall; 222. Circumferential side wall; 223. Anti-separation protrusion.

### Detailed Description of the invention

It should be noted that, as long as there is no conflict, the embodiments and features in the embodiments of this application can be combined with each other. The present invention will be described in detail below with reference to the accompanying drawings and embodiments.

The technical solutions in the embodiments of the present invention will be clearly and completely described below with reference to the accompanying drawings in the embodiments of the present invention. Obviously, the described embodiments are only some of the embodiments of the present invention, rather than all the embodiments. The following description of at least one exemplary embodiment is merely illustrative in nature and is in no way intended to limit the invention, its application or uses. Based on the embodiments of the present invention, all other embodiments obtained by those of ordinary skill in the art without making creative efforts fall within the scope of protection of the present invention.

It should be noted that the terms used herein are only for describing specific embodiments and are not intended to limit the exemplary embodiments according to the present application. As used herein, the singular forms are also intended to include the plural forms unless the context clearly indicates otherwise. Furthermore, it will be understood that when the terms "comprises" and/or "includes" are used in this specification, they indicate there are features, steps, operations, means, components and/or combinations thereof.

The relative arrangement of components and steps, numerical expressions, and numerical values set forth in these examples do not limit the scope of the invention unless specifically stated otherwise. At the same time, it should be understood that, for convenience of description, the dimensions of various parts shown in the drawings are not drawn according to actual proportional relationships. Techniques, methods and devices known to those of ordinary skill in the relevant art may not be discussed in detail, but where appropriate, such techniques, methods and devices should be considered part of the authorized specification. In all examples shown and discussed herein, any specific values are to be construed as illustrative only and not as limiting. Accordingly, other examples of the exemplary embodiments may have different values. It should be noted that similar reference numerals and letters refer to similar items in the following figures, so that once an item is defined in one figure, it does not require further discussion in subsequent figures.

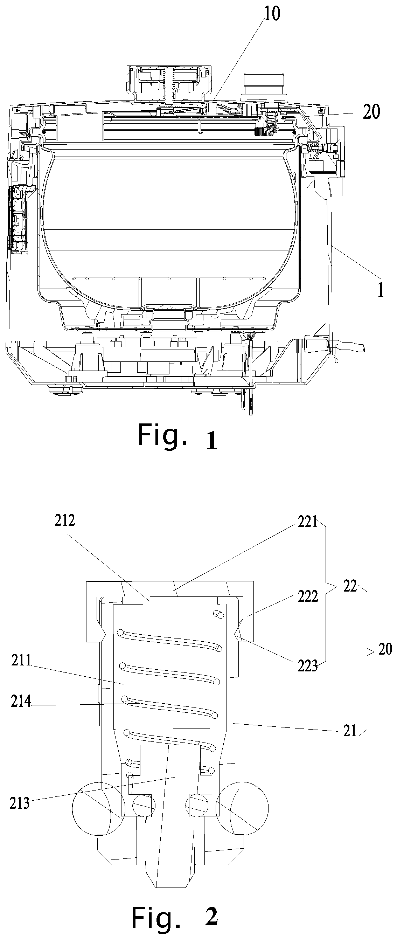

As shown in Figures 1 and 2, this embodiment provides a cooking utensil, including a pot body, a lid body 10 and a safety valve assembly. The lid body 10 can be opened and closed above the pot body 1; the safety valve assembly 20 is disposed on the lid body 10. The safety valve assembly 20 includes a valve body 21, and a cavity 211 is provided in the valve body 21. The upper end of the cavity 211 is provided with an opening 212. The safety valve assembly 20 further includes a covering member 22, which is connected to the valve body 21 and covers the opening 212.

In this embodiment, since the valve body 21 is provided with the covering member 22, the opening 212 at the upper end of the valve body 21 can be covered and blocked, and thus during the use of the cooking utensil, the boiling water vapor in the cooking cavity will not enter the cavity 211 through the opening 212 on the valve body 21, and the user will not have water enter the cavity 211 when cleaning the cooking utensil. This further ensures that the valve body 21 can be pressurized normally and ensures a good cooking effect of the cooking utensil.

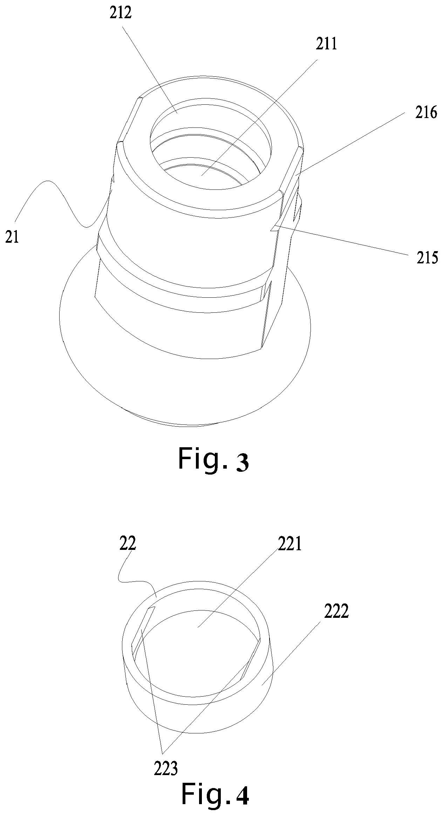

As shown in Figures 2 and 3, in this embodiment, the valve body 21 is an opening preventing valve, and the opening preventing valve can move in a vertical direction relative to the lid body 10 to control the opening and closing of the lid body 10.

Specifically, when the pressure in the cooking cavity is higher than the preset value, the opening preventing valve moves upward to press the cooking utensil normally to control the lid body 10 to be in the closed position so that the user cannot open the lid. When the pressure is lower than the preset value, the opening preventing valve moves downward to release the pressure in the cooking utensil so that the user can open the lid body 10.

Since the covering member 22 is provided on the valve body 21, the opening 212 can be covered and blocked to prevent water vapor from entering the cavity 211 through the opening 212, thereby ensuring the normal upward and downward movement of the opening preventing valve and allowing timely pressure increase and release in the cooking cavity to ensure normal cooking results.

As shown in Figure 2, in this embodiment, the valve body 21 includes a pressure relief valve. The pressure relief valve includes a valve core 213 arranged at the lower end of the cavity 211 and an elastic member 214 arranged inside the cavity 211 and abutting against the valve core 213.

Through the above arrangement, the elastic force of the elastic member 214 provides downward resistance for the valve core 213 to keep the valve core 213 in the closed position and maintain the internal pressure of the pot body 1 when the internal pressure of the pot body 1 is within the normal range.

As shown in Figures 2 and 4, in this embodiment, the covering member 22 includes a top wall 221 and a circumferential side wall 222 extending downward from the top wall 221. The top wall 221 covers/blocks the opening 212, and the circumferential side wall 222 is located around the outer periphery of the valve body 21.

Specifically, the covering member 22 in this embodiment is a cylindrical structure without cover at one end. The covering member 22 covers the valve body 21, the top wall 221 blocks the opening 212, and the circumferential side wall 222 cooperates with the peripheral wall of the valve body 21. The above structure is relatively simple and easy to process and assemble.

Preferably, the top wall 221 and the circumferential side wall 222 in this embodiment are integrally formed structures. The above arrangement ensures the overall structural strength of the covering member 22 and ensures its service life.

As shown in Figures 2 to 4, in this embodiment, an anti-separation (anti-removal) structure is provided between the valve body 21 and the covering member 22, and the anti-separation structure restricts the covering member 22 from falling off the valve body 21.

The above arrangement ensures the stability of the installation of the covering member 22 on the valve body 21 and prevents the covering member 22 from being detached from the valve body 21 during use of the cooking utensil or when the user cleans the cooking utensil, thereby ensuring a good waterproof effect.

As shown in Figures 3 and 4, in this embodiment, the anti-separation structure includes anti-separation protrusions 223 and anti-separation grooves 215. The anti-separation protrusion 223 is provided on the inner wall surface of the circumferential side wall 222; the anti-separation groove 215 is provided on the outer peripheral wall of the valve body 21, and the anti-separation protrusion 223 cooperates with the anti-separation groove 215 to restrict the covering member 22 from coming out of the valve body 21.

In this embodiment, when the covering member 22 is installed on the valve body 21, the anti-separation protrusion 223 is plugged into (snaped into) the anti-separation groove 215, thereby effectively preventing the covering member 22 from being removed from (falling off) the valve body 21 during use, affecting the water-blocking effect. Moreover, the above-mentioned plugging-in (snap-fit) structure is simple and convenient for assembly operation.

As shown in Figures 3 and 4, in this embodiment, there are a plurality of anti-separation protrusions 223, and the plurality of anti-separation protrusions 223 are arranged at intervals (spaced apart) on the inner wall surface of the circumferential side wall 222; there are a plurality of anti-separation grooves 215, and the plurality of anti-separation grooves 215 are arranged at intervals (spaced apart) on the outer peripheral wall of the valve body 21.

The above arrangement increases the contact area of the covering member 22 and the valve body 21 for plug-fitting, and realizes multiple fitting connections in the circumference of the valve body 21, ensuring the stability of the cooperation between the covering member 22 and the valve body 21.

As shown in Figures 3 and 4, in this embodiment, a gap is provided between the inner wall surface of the circumferential side wall 222 and the outer peripheral wall of the valve body 21.

Specifically, the circumferential side wall 222 is sleeved on the outer periphery of the valve body 21. Since there is a gap between the inner wall surface of the circumferential side wall 222 and the outer peripheral wall of the valve body 21, it is ensured that when the valve body 21 releases pressure, the air can flow out from the gap to ensure normal exhaust pressure relief.

As shown in Figures 2 and 3, in this embodiment, a flow-passing structure is also provided between the valve body 21 and the covering member 22.

Through the above arrangement, the arrangement of the covering member 22 will not affect the exhaust of the valve body 21, ensuring the normal operation of the valve body 21.

As shown in Figure 3, in this embodiment, the flow-passing structure is a notch 216 provided on the valve body 21. The notch 216 is arranged on the outer wall surface of the valve body 21. There is a flow-passing gap between the covering member 22 and the notch 216.

Specifically, there are a plurality of notches 216, and the plurality of notches 216 are spaced apart on the outer wall surface of the valve body 21. A flow-passing gap is formed between the top end of the notch 216 and the inner wall surface of the covering member 22, so that exhaust can be achieved in the circumference of the valve body 21, and the exhaust efficiency is high.

As shown in Figures 3 and 4, in this embodiment, the notch 216 is a planar structure provided on the outer wall surface of the valve body 21, and the anti-separation groove 215 is opened on the planar structure. The anti-separation protrusion 223 is formed by protruding inwardly from the lower edge of the circumferential side wall 222. The anti-separation protrusion 223 is a strip-shaped protrusion, and the anti-separation groove 215 is a strip-shaped groove.

In this embodiment, a planar structure is formed by cutting on the outer wall surface of the valve body 21 to facilitate overflow passing. Arrangement of the anti-separation groove 215 on the planar structure reduces the difficulty of processing. At the same time, the anti-separation protrusion 223 is arranged in a strip shape, which is convenient for plug(snap) fitting with the strip-shaped anti-separation groove 215. The structure is simple and convenient for processing and assembly.

Preferably, the covering member 22 is made of silicone material.

The silicone material is light in texture and has good waterproof effect. When assembled to the valve body 21, it will not significantly increase the weight of the valve body 21, and will not affect the normal pressure-up of the cooking utensil, and the cost is low.

Preferably, the cooking utensil in this embodiment is an electric pressure cooker or a rice cooker.

From the above description, it can be seen that the above-mentioned embodiments of the present invention achieve the following technical effects:
Since the covering member is arranged on (above) the opening preventing valve, the opening at the upper end of the opening preventing valve can be covered and blocked. During the use of the cooking utensil, the boiling water vapor in the cooking cavity will not enter the valve body through the upper opening of the opening preventing valve, and users will not have water enter the valve body when cleaning the cooking utensil, thereby ensuring that the opening preventing valve can be pressurized normally and ensuring good cooking effects of the cooking utensil.

For the convenience of description, spatially relative terms can be used here, such as "on...", "above...", "on the upper surface of...", "upper", etc., to describe what is shown in the figure. The spatial relationship between one device or feature and other devices or features. It will be understood that the spatially relative terms are intended to encompass different orientations of the device in use or operation in addition to the orientation depicted in the figures. For example, if a feature in the figure is turned upside down, then one feature described as "above" or "on top of" other features or features would then be oriented "below" or "under" other devices or structures. Thus, the exemplary term "over" may include both orientations "above" and "below." The device may be otherwise oriented (rotated 90 degrees or at other orientations) and the spatially relative descriptors used herein interpreted accordingly.

In addition, it should be noted that the use of words such as "first" and "second" to define parts is only to facilitate the distinction between corresponding parts. Unless otherwise stated, the above words have no special meaning and therefore cannot be understood. To limit the scope of protection of the present invention.

The above descriptions are only preferred embodiments of the present invention and are not intended to limit the present invention. For those skilled in the art, the present invention may have various modifications and changes. Any modifications, equivalent substitutions, improvements, etc. made within the spirit and principles of the present invention shall be included in the protection scope of the present invention.

## Claims

1. A cooking utensil, **characterized in that** it includes:
a pot body (1);
a lid body (10), which is arranged above the pot body (1) in an openable and closable manner;
a safety valve assembly (20), which is provided on the lid body (10), the safety valve assembly (20) including a valve body (21), a cavity (211) being arranged in the valve body (21), and an opening (212) is arranged at an upper end of the cavity (211);
Wherein the safety valve assembly (20) further includes a covering member (22), the covering member (22) being connected to the valve body (21) and blocking the opening (212).

2. The cooking utensil according to claim 1, wherein the valve body (21) is an opening preventing valve, and the opening preventing valve is capable to move in a vertical direction relative to the lid body (10) to control the opening and closing of the lid body (10).

3. The cooking utensil according to claim 1 or 2, wherein the valve body (21) includes a pressure relief valve, and the pressure relief valve includes a valve core (213) arranged at a lower end of the cavity (211) and an elastic member (214) arranged inside the cavity (211) and abutting against the valve core (213).

4. The cooking utensil according to claim 1, wherein the covering member (22) includes a top wall (221) and a circumferential side wall (222) extending downward from the top wall (221), the top wall (221) covering the opening (212), and the circumferential side wall (222) being located around an outer periphery of the valve body (21).

5. The cooking utensil according to claim 4, wherein an anti-separation structure is provided between the valve body (21) and the covering member (22) such that the anti-separation structure restricts the covering member (22) from detaching from the valve body (21).

6. The cooking utensil according to claim 5, wherein the anti-separation structure includes:
an anti-separation protrusion (223) provided on an inner wall surface of the circumferential side wall (222);
an anti-separation groove (215) provided on an outer peripheral wall of the valve body (21);
wherein the anti-separation protrusion (223) and the anti-separation groove (215) cooperate with each other to restrict the covering member (22) from detaching from the valve body (21).

7. The cooking utensil according to claim 6, wherein a gap is arranged between the inner wall surface of the circumferential side wall (222) and the outer peripheral wall of the valve body (21).

8. The cooking utensil according to claim 6, wherein a flow-passing structure is further arranged between the valve body (21) and the covering member (22).

9. The cooking utensil according to claim 8, wherein the flow-passing structure is a notch (216) provided on the valve body (21), and the notch (216) is arranged on an outer wall surface of the valve body (21), a flow-passing gap being arranged between the covering member (22) and the notch (216).

10. The cooking utensil according to any one of claims 1 to 8, wherein the covering member (22) is made of silicone material.
